# EUROPEAN PATENT APPLICATION

(11) **EP 1 728 569 A1**
(43) Date of publication of application: **06.12.2006**
(21) Application number: 06113894.7
(22) Date of filing: 12.05.2006
(51) Int. Cl.: B21J 15/50, F16B 19/10, B25C 11/02

(54) **A blind rivet, removal system and related method**

(30) Priority: 31.05.2005 GB 0511052
(71) Applicant: Newfrey LLC, Newark, Delaware 19711 (US)
(72) Inventor: Smith, Daniel Robin, Kidderminster DY 10 1XH (GB); Jones, Steven Victor, Great Barr, Birmingham B43 5LN (GB); Evans, David John, Rogerstone, Newport NP10 9FU (GB)
(74) Representative: Haar, Lucas Heinz Jörn

(57) **Abstract**

The present invention relates to a blind rivet and blind rivet removal system (54) and related method.

The invention provides a rivet with a stepped flange and a rivet removal tool with clips (44,46) adapted to fit between the flange (51) and surface (20) of a workpiece so that upon relative displacement of the clips (44,46) a rivet is extracted in a substantially axial direction as a single item.

The invention also includes a tool and related method of blind rivet removal.

## Description

The present invention relates to a blind rivet and more particularly to a blind rivet and blind rivet removal system and related method.

A blind rivet removal method typically employs a power-operated tool to extract, ideally as a single piece (or substantially as a single piece) an installed blind rivet from a location to where it has been applied or fitted. The location is often referred to as an application.

Blind rivets are designed as permanent fixings to hold adjacent workpieces together. Usually the workpieces have holes through them. The holes are aligned prior to the rivet being inserted and set therethrough, thereby clamping the workpieces one to another. Thus the blind rivet not only provides a means of clamping the workpieces together, but also a tight fit in the hole or aperture formed therein.

Once set the blind rivet is not normally removed, except in the case of repair to the application or where the rivet bas been incorrectly installed and requires replacement. This need to remove, repair and replace can happen in any branch of assembly engineering.

Another use of blind rivets is as a means of temporarily clamping or fixing two or more parts of an application whilst they are being glued together. Such methods are currently used in the aerospace industry, for example in the assembly of fuselage components. In such situations rivets require subsequent removal once the glue has attained full adhesive strength.

More recently rivet removal is also of concern due to developing legislation concerning full recycling of automobiles after a vehicle has reached the end of its life and is being scrapped.

There are also specific systems - such as unused airbags - from which it is important that certain components are removed. Since assembly of these components often employs blind rivets, so as to take advantage of low cost assembly methods, it follows that these components should also easily and cost effectively be removable by way of blind rivets, which themselves may be easily removed.

To appreciate the difficulties associated with the removal of blind rivets it is beneficial to understand the general methods used in the installation of, and the resulting structure of, the blind rivet.

A blind rivet is usually a two-part assembly comprising a rivet body and a mandrel. In operation a mandrel stem is inserted into a pulling jaw of a rivet setting tool. In use the setting tool and the rivet body are inserted into a prepared hole in the application (which typically comprises one or more sheets of material) so that the flange of the rivet body abuts the side of the workpiece facing the operator.

The rivet is set by applying a tension force to the mandrel. The tension force is transmitted to the rivet on a blind side of the application or workpiece by means of the mandrel head. As the applied load exerted by the mandrel head on the end of the rivet body increases, the rivet body deforms, expanding radially on the blind side and partially filling the hole in the application or workpiece, from the blind side.

As the tension force increases, the mandrel head enters the rivet body and progresses towards the flange until the mandrel head reaches the proximity of the blind side face of the workpiece, thereby clamping the application parts. As the mandrel head approaches the surface of the workpiece, on the blind side, the diameter of the rivet body substantially increases to fill the hole. The mandrel head is arrested and is unable to progress further. As the applied load increases the mandrel breaks under the tensile force at a predetermined load and the setting is completed.

The set rivet thus comprises a rivet body with its flange firmly abutting the operator side of the application or workpiece; a radially expanded body on the blind-side of the application or workpiece and the remainder of the mandrel left in-situ after the rivet has been set.

In order to remove the installed blind rivet it has been necessary to remove the rivet flange by a variety of methods including: using a metal working chisel, metal cutting pincers or by removing the centre of the flange with a twist drill of a diameter that is substantially the same as the rivet body diameter. After the flange has been removed, that portion of the rivet body that remains in the application can be pushed out of the application, in a direction towards the blind side (away from the operator), for example by using a fat-ended punch that is substantially the same diameter as the rivet body.

When it was desired to remove these types of rivets, generally the use of a chisel has been ineffective due to the resistance afforded by the hardened steel mandrel portion. There has therefore been a risk of damage to the application or workpiece. Any attempt at drilling the flange of the rivet results in damage, as the point of the drill on touching the hard mandrel end, is deflected sideways, off the axis of the rivet body and into the application. This has lead to damage to the application and sometimes entailed expensive refurbishment.

Even where the mandrel head portion was short, this presented a problem when the rivet was removed, since the drill point could be deflected by the retained mandrel portion.

There have been various techniques proposed for the removal of rivet flanges by metal removal using a metal twist drill or a milling cutter end mill. One such technique is described in published Japanese Patent Application number JP2000 084755 (Ricoh KK). The technique described is one of several existing methods. There are others that are very similar and are well known by persons skilled in the art.

However, this technique does present problems in that where the flange was drilled, and a metal removal drill (of substantially the same diameter as the body of the rivet) was used, there resulted unwanted swarf or chips. Removing this unwanted swarf and debris often proved difficult, labour intensive and costly in terms of time. Another problem was that the removal of debris was potentially hazardous, for example if electronic or electrical hardware was present. A further problem associated with the unwanted swarf or chips was that they caused corrosion and environmental problems.

Another problem encountered by existing metal removal methods is that after having drilled through the flange, a residual part of the flange, which is usually in the form of a ring or an annulus of material, comes away and surrounds the drill. This has required removal manually of the ring or annulus from the drill bit and has been time consuming and hazardous and entailed the use of finger protection or a tool to prevent fmgers being cut.

A method to overcome this problem is described in US Patent US 4,285,265 (Messerschmitt - Boelkow - Blohm). The method describes how a slot is formed in the flange in two places diametrically opposite one another so that the residual flange portion falls away in two pieces after it has been removed by the drill.

However, this again presents a problem, particularly in the aerospace industry, there remained the problem that all residual parts had to be found and accounted for, so that the risk of damage by particles was eliminated. This became a particularly laborious task when the rivet was used as a temporary fixing.

US Patent Numbers US 4,541,761 (USM Corporation) and US 4,436,467 (Larsson and Anderson) disclose methods of removing the head of the rivet by tearing the flange portion away from the rivet body; this is made possible by an annular weakening beneath the flange.

There is disclosed in US Patent US 3452638 (Gesipa) a rivet with a stepped flange to give a recess beneath the rivet flange, after the rivet has been set. It is a feature of this rivet that the mandrel head shaft, together with its mandrel head, remains in place after the rivet has been set. The rivet is designed so that additional workpiece components can be attached by means of a keyhole slot that allows access through a large hole portion, to be slid along so that the step diameter engages the smaller hole of the keyhole. The mandrel head shaft extends the full length of the set rivet body and thus adds substantial support to lateral loads imposed on the set rivet body during assembly of the additional component and subsequently in service.

To remove this type of rivet, however, is also problematic as the designs of blind rivets, such as rivets with a high shear resistance, where the remaining mandrel head portion includes a long head-shaft portion. Typically the head-shaft portion supports the full length of the set rivet (including the flange portion). These types of mandrels are usually formed from a high tensile steel wire. The remaining portion of the mandrel is retained in the set rivet body, such that the broken end portion is close to, or even flush with, the outer surface of the flange of the rivet. The removal of these rivets by conventional means, as described above, can lead to application damage with attendant refurbishment costs or scrapping costs as well as the cost of removal and accounting for removed rivets parts and metal chippings.

It is an object of this invention to provide a blind rivet and a means of removing it such that the blind rivet is removed substantially in its entirety or entirely from the application or workpiece without damage to the application or workpiece.

It is a further object of this invention to provide a blind rivet that is removable without generating swarf and debris usually associated with removing the flange either singly or in two parts by the use of metal removal techniques.

It is a yet further object of this invention to provide a tool for removal of the aforementioned blind rivet.

According to a first aspect of the invention there is provided a blind rivet adapted for removal substantially in one piece comprising a rivet body which, in use is adapted to receive a mandrel, the rivet having a rivet head with a flange characterised in that a stepped region is provided in the flange, said stepped region being dimensioned to receive a rivet removal tool and being adapted to resist deformation or breaking as the extraction force is applied.

Preferably the rivet is of sufficient size and/or formed from a material with suitably strong tensile properties to remain intact when extracted.

The first aspect of the invention relates to the blind rivet that is similar to a conventional blind rivet, except for the fact that a flange has a step, defined by a recess, whereby, in use, the stepped portion of the flange abuts the application and is thus providing an annular recess beneath the flange, for receiving a removal tool.

The stepped region is ideally dimensioned and arranged to receive the adapted nosepiece of the rivet removal tool between the flange and surface of a workpiece so that upon relative displacement of an adapted nosepiece, with respect to the workpiece, the rivet is extracted as a single piece, in a substantially axial direction.

The blind rivet is distinguished over break head or break stem type rivets in that the setting of the blind rivet is different in that a mandrel head pulls through the rivet body providing substantial hole filling of an aperture in the workpiece. There is therefore minimal expansion of the rivet body on the blind side of the workpiece. This type of blind rivet is often referred to as a pull-through blind rivet.

In an alternative embodiment a rivet, of the break stem type, may be modified so as to be removable in substantially a single piece.

As the rivet is removed substantially in its entirety, there is no longer any need to clean debris, remove and account for rivet bodies and rivet flanges or parts of rivet flanges from the application. This is because the risk of debris, flanges and rivet body parts, possibly causing subsequent damage and risk of failure of the application, are no longer produced upon removal of the rivet.

According to another aspect of the invention there is provided a blind rivet removal tool with the adapted nosepiece adapted to fit between the flange of a blind rivet, which has been set, and surface of a workpiece, in which the rivet has been set, whereby upon relative rearward displacement of the adapted nosepiece, with respect to the workpiece, the rivet is extracted in a substantially axial direction as a single item.

Advantageously the blind rivet removal tool comprises: an outer support barrel which, in use, is adapted to abut the application or workpiece; and the adapted nosepiece has a rivet engagement, portion which is dimensioned to engage the rivet during a pulling operation, whereby once engaged, the adapted nosepiece portion is operated by a piston mechanism.

Preferably the engagement the adapted nosepiece portion includes a pulling drawbar and is connected to a pulling piston of the tool.

One end of the drawbar ideally has a 'U' shaped slot, which, in use, is slotted over the flange portion of the rivet body. When the tool is operated the inner drawbar retracts and pulls the rivet flange and body out of the application hole and the forces that urge the rivet from the workpiece (in a rearward direction) are supported by an outer support barrel.

This aspect of the invention provides a rivet removal tool that is adapted to remove rivets easily quickly and without risk of damage to the application.

Since the rivet is removed in one piece, the need to clean debris, remove and account for rivet bodies and rivet flanges (or parts of rivet flanges) from the application is avoided. There is likewise reduced the risk of debris, flanges and rivet body parts, which might possibly cause subsequent damage and risk of failure of the application.

According to a further aspect of the invention there is provided a method of removing a blind rivet comprising the steps of inserting the adapted nosepiece of a rivet removal tool between a recess defined between a flange and a workpiece and applying tension to the rivet in order to withdraw it from the workpiece.

Such a rivet removal technique would have a clear and beneficial advantage over known metal removal methods since it does not involve the generation of chips or swarf and even in the worst case only a minimal amount of debris. Further the proposed method would have the advantage that the risk of damaging the application would be at an absolute minimum.

Also, in terms of improved productivity, the time needed to remove the rivet is substantially lower than the more usual metal removal and punching techniques with their associated and onerous tasks of collecting and accounting for ruptured flanges and punched out rivet bodies.

A further advantage of this method is that access to the blind side is not necessary since the rivet body does not require to be held by a pair of pliers squeezing the blind side of the rivet body in order to prevent it turning which is seen in other techniques such as drilling the flange with a twist drill or rotating the head of the rivet to rupture the rivet body and separate it from the flange.

A preferred embodiment of the invention will now be described by way of example only and with reference to the Figures in general, and with specific reference to Figures 5 to 10, in which:
Figures 1 to 4 show diagrammatical sectional views of sequential stages of setting a rivet into a workpiece;
Figures 5 and 6 show diagrammatical sectional views of sequential stages of removing a rivet from a workpiece;
Figure 7 is diagrammatical sectional view of a rivet removal tool, showing in detail, in part exploded form, the head of the removal tool, rivet and workpiece;
Figure 8 is a diagrammatical section through an alternative embodiment of a rivet (having a line of weakness), and shows a mandrel, which provides a break stem type of rivet having a defined break point;
Figure 9 is a sectional view of the rivet of Figure 8 shown assembled into the jaws of the rivet setting tool;
Figure 10 is a diagrammatical sectional view of the rivet of Figure 10, set in a workpiece and the spent portion of the rivet discarded; and
Figure 11 shows an alternative embodiment of a removable rivet
Referring to the Figures generally, and initially to the stages of inserting and setting rivet 8 in the application parts, as shown in Figures 1 to 4. The inclusion of Figures 1 to 4 is considered to provide a useful background to the mechanics of a set rivet.

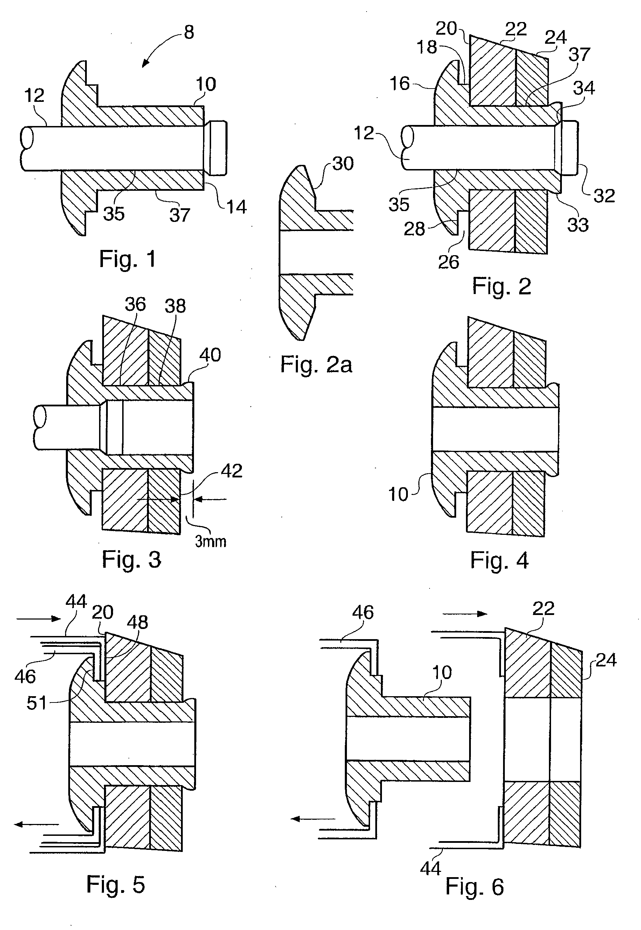

Figures 5 and 6 show stages of removal of the set rivet 10.

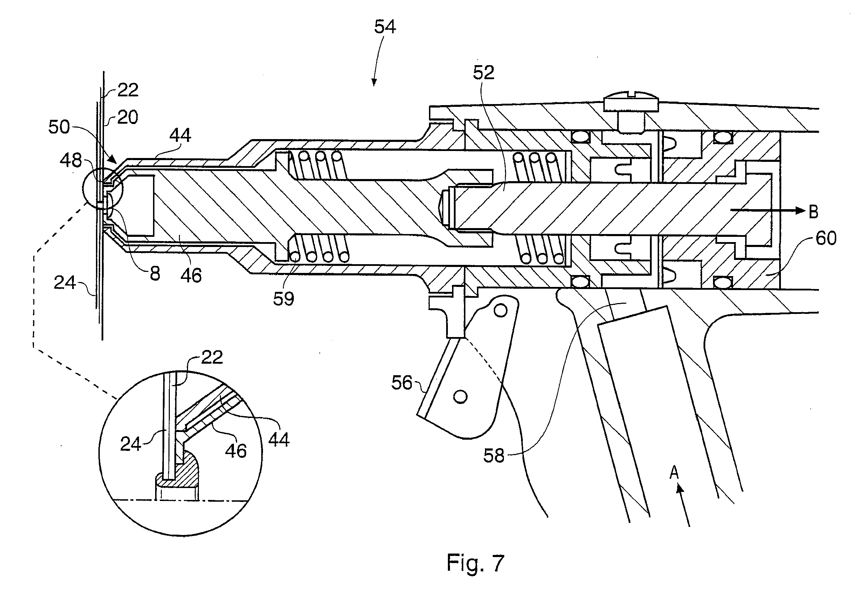

Figure 7 is an example of a rivet removal tool, for extracting the blind rivet.

Figure 1 shows a rivet assembly 8. The assembly 8 comprises a rivet body 10 and a mandrel 12. The mandrel 12 is assembled to the rivet body 10 (hereinafter referred to as rivet) in a conventional manner. The mandrel has a stem which in use passes through a central bore of the rivet 10 such that the mandrel head abuts a blind-side end 14 of the rivet 10.

The rivet assembly, shown in Figure 2, is inserted into a series of registered prepared holes in the applications or workpieces 22 and 24. Rivet 10 has a flange 16 that has been stepped with an intermediate diameter 18 such that, upon setting, when the rivet 10 abuts external surface 20 of the application or workpiece 22 there is a gap or recess 26, which is defined between the surface 20 and the inner surface 28 of the flange 16. This gap is defined by the step, which is formed on, or in, the inner surface 28 of flange 16.

An alternative rivet flange style is shown in Figure 2a, where the gap or recess 26 is formed as a result of back taper 30 beneath the rivet flange 16. The flange portion only of this alternative embodiment of a rivet is shown in Figure 2a. The nose piece 50 of the extraction tool is adapted so that the nose piece 50 of the tool effectively sits under the rivet head: that is between the rivet head and a surface of the workpiece, as described below with reference to Figures 5 to 7.

Referring again to Figure 2, the mandrel stem 12 comprises a relatively elongate stem portion and an enlarged head 32 with a frusto-conical portion 34. The frusto-conical portion defines a transition between the stem 12 and the enlarged head 32. The diameter of the enlarged head 32 is larger that the bore 35 of the rivet body 10 but significantly smaller that the outer diameter 37 of the rivet body 10. In practice the diameter of the enlarged head 32 would be between 10% and 25% larger than the bore 35 of the rivet body 10. The frusto-conical portion of the mandrel 12 facilitates easy entry into the rivet body, and this, together with the smaller mandrel head 32 gives rise to lower rivet setting tool loads. This is principally due to the fact that as the head 32 of the mandrel 12 progresses through the rivet body 10 it does so in a smooth and controllable manner.

Figures 3 and 4 show what occurs in practise, when the rivet 8 is assembled into a blind rivet setting tool (not shown) in the normal manner, such that the rivet assembly 8 (comprising rivet body 10 and mandrel 12) is inserted into prepared apertures or holes 36 and 38 in applications 22 and 24 respectively. It is noted that the rivet body 10 protrudes an amount 40 beyond blind-side face 42 after the rivet body 10 has been set or partially set in the application parts. This amount 40 of protrusion can vary from being flush to approximately 3 mm (0.003 m) such that, as shown, there is only a very small amount of rivet protruding beyond the surface 42 of the blind-side.

It is common practise in the art of blind riveting that a blind rivet setting tool grips and pulls the mandrel stem 12 and sets the rivet body 10. Setting the rivet body 10 is performed firstly by supporting flange 16 of the rivet 10 by a nosepiece 70 of the blind rivet setting tool. A mandrel pulling means (not shown) retracts and pulls the mandrel head 32 towards the flange 16 of the rivet 10.

Commencement of the pulling operation is shown in Figure 2, at which point the blind-side bulge 33 has been formed and the application workpieces 22 and 24 have been clamped together. As the mandrel 12 further progresses towards the flange 16 of rivet 10 (as seen in Figure 3) rivet body material is forced radially outwards to fill the hole or aperture in the application, thereby consolidating the joint.

Completion of the set rivet 10 is shown in Figure 4. The mandrel 12 and its head 32 are not shown as they have been removed from the set rivet body 10 and discarded.

Figure 5 shows commencement of rivet removal. Figure 6 shows the rivet body 10 removed from the workpiece parts 22 and 24. Nosepiece 50 of a rivet extraction tool 54 (shown in detail in Figure 7) is shown diagrammatically in two parts: an outer support barrel 44 and an inner pulling bar 46. Both parts have 'U'-shaped slots aligned one with another, such that they can be slid over the flange 16 of the rivet body 10 as seen, for example, in Figure 5.

Figure 6 shows the relative position of the rivet body 10 with respect to the workpiece parts 22 and 24, once rivet extraction is complete. Front face 48 of support barrel 44 (shown in detail in Figure 7) abuts an external surface 20 of the application workpiece 22. Inner face 51 of pulling bar 46 abuts face 28 beneath the flange 16 of the rivet body 10. In exactly the same process as rivet setting, the outer surface 20 of the workpiece 22 is supported by outer support barrel 44 whilst the pulling bar 46 retracts rearwardly, with respect to support barrel 44, to extract the whole of the rivet body 10 from the application parts 22 and 24.

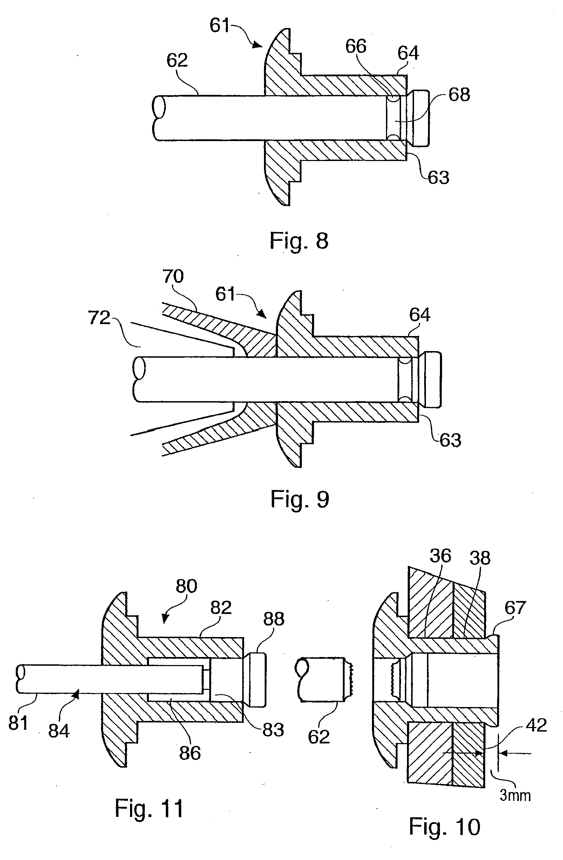

Figures 8 to 10 show diagrammatically stages of setting an alternative type of rivet 61, known as a break stem rivet. Figure 8 shows mandrel 62 inserted into a hollow rivet body 64 with a line of weakness created as a groove 66 in the mandrel head portion 68.

Figure 9 shows the rivet assembly 61 assembled to the nose piece 70 of a rivet setting tool (not shown) with the mandrel stem 62 being gripped by the pulling jaws 72.

In Figure 8 the outer diameter of the mandrel is ideally identical to the inner diameter of the bore in the rivet body 10. A narrow neck region 68 between the head and the stem 62 of the mandrel provides a region of stress concentration 66 where the mandrel breaks during the setting process. The set rivet is shown in Figure 10 and shows the rivet set with the head of the mandrel remaining inside the rivet body but in a distance from the blind end of the rivet body. The mandrel stem is broken at the weakening groove and disposed.

Upon removal of the rivet it will be appreciated that as the rivet body 10 is being withdrawn from the application hole, the bulged end portion of the rivet is forced or swaged inwardly, thus the rivet is removed in its entirety without the generation of debris.

As axial displacement between the outer support barrel 44 and the pulling displaced, and thereby urge movement of material of the rivet body end 67 inwardly, it has been found advantageous to countersink edge of the hole 38 of the aperture on the blind-side of the application hole. For simplicity, this countersunk aperture is not shown in detail. However, in many cases, access to the blind-side of the application to countersink the hole on the blind-side is not practicable and it can be envisaged that a small amount of debris may be cut from the bulged end of the rivet body 10 as it passes past the blind side hole.

As the rivet and the removal tool are both hollow, it is also envisaged that a vacuum pump (not shown) may be provided to draw air away from the workpiece. In such situations where this permits, any tiny fragments or debris may be sucked into a reservoir (not shown) by way of the vacuum cleaning effect. Thus with the combined action of the rivet removal tool and, for example a vacuum cleaner, there is minimal risk of any swarf or debris remaining in the workpiece.

Once the rivet body 10 has been removed from the holes in the application, the extraction tool 54 can be removed and the obsolete rivet body 10 discarded. Thus the rivet body 10 can be removed from the application without recourse to drilling or punching and potential risk of damage to the application. Furthermore extraction of the rivet body 10 can be achieved without the generation of chips or parts of rivets that need to be subsequently recovered and in some cases counted.

An alternative embodiment of removable rivet is shown in Figure 11. This particular version of break stem rivet 80 comprises a rivet body 82 with a mandrel 84 passing through a stepped bore 86. The mandrel 84 has an enlarged head portion 88 with a stem 81 and a weakened portion 83. The enlarged head portion 88 comprises a shoulder 89 adjacent the weakened portion 83 and facing an opposite shoulder 87 formed by the stepped bore 86 adjacent the flange 85. On setting a tensile force, applied by the setting tool, the shoulder 89 of the head portion 88 is drawn against the opposite shoulder 87 of the rivet body 82, thereby causing rupture of the mandrel stem at 81, leaving the head in the rivet body 82 in a similar way as shown in Figure 10.

A second aspect of the invention relates to a means for removing the rivet using a power or hand-held tool 54. An embodiment of a rivet removal tool 54 is shown in Figure 7 in diagrammatic section.

Referring to Figure 7 outer barrel 44 has, in use, its front face 48 resting against, and supporting, the application surface 20. The internal pulling drawbar 46 is shown connected to the pulling piston rod 52 of the tool 54.

Machined into the outer barrel 44 and the pulling draw bar 46 is a 'U' shaped slot such that the slot is allows the pulling draw bar 46 to be located behind the flange face 28. On initiating extraction tool trigger 56 of the tool generates a sufficient hydraulic pressure, which is directed into the head of the tool via port 58 in the direction of arrow A. Pulling piston 60 is moved rearwardly, in the direction of arrow B, to extract the rivet 10 from the application. On releasing the trigger 56 the pulling drawbar 46 and the piston 60 return to their forward position by virtue of a spring 59. The extracted rivet 10 can be discarded.

The system is considered to offer beneficial advantages to automobile construction as well as breakers (recovery and recycling companies) where recycling of vehicles has a focus of attention.

The invention has been described by way of examples only and it will be appreciated that variation may be made to the embodiments described without departing from the scope of the invention.

## Claims

1. A blind rivet adapted for removal, substantially in one piece, comprising: a rivet body (10) which, in use, receives a mandrel (12), the rivet having a rivet head with a flange (16) at one end of the rivet body (10), **characterised in that**, the mandrel (12) is shaped to be pulled on setting at least partly through the rivet body (10) and out of the end opposite to the flange (16), and that a stepped region is provided in the flange (16), said stepped region being dimensioned to receive a rivet removal tool (54) and of sufficient dimension to resist deformation or breakage during the extraction process so that upon relative displacement of the rivet removal tool (54), to the workpiece, the rivet body (10) is extracted in a substantially axial direction.

2. A blind rivet according to claim 1 wherein the stepped region is defined by a recess (26), whereby, in use, the stepped portion of the flange (16) abuts the application and is, thus providing a continuous recess adjacent the flange for receiving a removal tool.

3. A blind rivet according to claim 1 or 2 wherein the stepped region is an annulus.

4. A blind rivet according to claim 3 wherein the annulus is dimensioned and arranged to receive the adapted nosepiece (50) of the rivet removal tool (54) between the flange (16) and surface of a workpiece (22).

5. A blind rivet according to any preceding claim wherein the stepped region is formed as a result of taper (30) beneath the rivet flange (16).

6. A blind rivet according to any preceding claim is adapted for use with countersunk edges of an aperture formed on the blind-side of the application hole.

7. A blind rivet according to any preceding claim whereby the blind rivet is a pull-through blind rivet.

8. A blind rivet according to any preceding claim wherein the mandrel (12) comprises a relatively elongate stem portion and an enlarged head (32) with a substantially frusto-conical portion (34).

9. A blind rivet according to any preceding claim wherein the mandrel (84) comprises a shoulder (89) facing away from the head (88) and engaging an opposite shoulder (87) provided at the rivet body (82) or at the rivet setting tool and limiting the pulling movement of the head portion of the mandrel (84) during setting.

10. A blind rivet removal tool (54) with the adapted nosepiece (50) adapted to fit between the flange (16) of the blind rivet according to any of claims 1 to 8, and a surface of a workpiece (22) so that upon relative displacement of the nosepiece (50) the rivet is extracted in a substantially axial direction, as a single item.

11. A blind rivet removal tool (54) according to claim 10 comprises: an outer support barrel which, in use, is adapted to abut the application or workpiece (22), a rivet engagement portion which is dimensioned to engage the rivet during a pulling operation, whereby the engagement portion is operated by a piston mechanism.

12. A blind rivet removal tool according to claim 11, wherein the rivet engagement portion includes a pulling drawbar and is connected to a pulling piston of the tool.

13. A blind rivet removal tool according to any of claims 10 to 12 has an adapted nosepiece adapted to fit one end of the drawbar, said the adapted nosepiece being in the form of a 'U' shaped slot that is slotted over the flange (16) of the rivet body (10).

14. A blind rivet removal tool according to any of claims 10 to 13 includes a vacuum pump for drawing air away from the workpiece, thereby in use removing any swarf or debris remaining in the workpiece.

15. A method of removing a blind rivet comprising the steps of inserting a rivet removal tool between a recess defined between a flange and a workpiece and applying tension to the rivet in order to withdraw it from the workpiece.
